Europäisches Patentamt

European Patent Office

Office européen des brevets

(19)

(11) **EP 1 071 921 B1**

(12) **EUROPÄISCHE PATENTSCHRIFT**

(45) Veröffentlichungstag und Bekanntmachung des Hinweises auf die Patenterteilung:
**06.08.2003   Patentblatt 2003/32**

(51) Int Cl.⁷: **G01B 11/00**

(21) Anmeldenummer: **99917988.0**

(86) Internationale Anmeldenummer:
**PCT/EP99/02570**

(22) Anmeldetag: **10.04.1999**

(87) Internationale Veröffentlichungsnummer:
**WO 99/053269 (21.10.1999 Gazette 1999/42)**

(54) **VERFAHREN UND ANORDNUNG ZUR MESSUNG VON STRUKTUREN EINES OBJEKTS**

METHOD AND ARRANGEMENT FOR MEASURING THE STRUCTURES OF AN OBJECT

PROCEDE ET DISPOSITIF DE MESURE DE LA STRUCTURE D'UN OBJET

(84) Benannte Vertragsstaaten:
**DE ES FR GB IT**

(30) Priorität: **11.04.1998   DE 19816272**

(43) Veröffentlichungstag der Anmeldung:
**31.01.2001   Patentblatt 2001/05**

(73) Patentinhaber: **Werth Messtechnik GmbH**
**35394 Giessen (DE)**

(72) Erfinder: **CHRISTOPH, Ralf**
**D-35641 Schöffengrund (DE)**

(74) Vertreter:
**Stoffregen, Hans-Herbert, Dr. Dipl.-Phys.**
**Patentanwalt,**
**Friedrich-Ebert-Anlage 11b**
**63450 Hanau (DE)**

(56) Entgegenhaltungen:
**WO-A-97/03346          US-A- 5 144 150**

Anmerkung: Innerhalb von neun Monaten nach der Bekanntmachung des Hinweises auf die Erteilung des europäischen Patents  kann jedermann beim Europäischen Patentamt gegen das erteilte europäische Patent Einspruch einlegen. Der Einspruch ist schriftlich einzureichen und zu begründen. Er gilt erst als eingelegt, wenn die Einspruchsgebühr entrichtet worden ist. (Art. 99(1) Europäisches Patentübereinkommen).

**Beschreibung**

Die Erfindung bezieht sich auf ein Verfahren und eine Anordnung zur Messung von Strukturen eines Objekts mittels eines einem Koordinatenmessgerät zugeordneten von einem biegeelastischen Schaft ausgehenden Tastelements, wobei das Tastelement mit dem Objekt in Berührung gebracht und sodann seine Position unmittelbar oder mittelbar über wenigstens eine dem Tastelement zugeordnete Zielmarke mit einem optischen Sensor bestimmt wird.

Eine Anordnung der vorstehend beschriebenen Art ist bereits bekannt (DE 297 10 242 U1) Bei dieser bekannten Anordnung wird die Oberflächentopographie eines Gegenstands bzw. Objekts mit einem Photogrammetriesystem und dem Tastelement gemessen. Das Tastelement, z. B. eine Kugel, ist am Ende eines elastischen Schafts angeordnet. Am Schaft können Zielmarken angebracht sein, deren Positionen relativ zu einem Tasterbezugssystem vom Photogrammetriesystem erfasst werden. Die Position des Tastelements wird z. B. aus den Zielmarkenpositionen bestimmt.

Bekannt ist auch ein Messsystem zur Erfassung der Oberflächentopographie von Gegenständen mit einem Messwertsender, der aus einem Taststift und einer Lichtquelle definierter Form an seinem Ende besieht. Die Lichtquelle wird längs der aufzunehmenden Kontur geführt. Bei diesem Verfahren erfasst ein optischer Empfänger die jeweilige Lage der einen Lichtfleck oder Lichtpunkt bildenden Lichtquelle in einem dreidimensionalen kartesischen Koordinatensystem. Ein Rechner wertet die Messergebnisse aus. Die Lichtquelle halt als Verlängerung des Taststifts z. B. die Form einer konzentrisch eingefassten Glasfaser (DE 40 02 043 C2).

Es ist weiterhin ein Tastsystem für die Messung kleiner Strukturen bekannt, welches auf einem Schwingquarz basiert, der eine Glasfaser mit Antastelement anregt. Bei Berührung mit der Werkstückoberfläche wird die Dämpfung des Systems ausgewertet. Diese Technik ermöglicht zwar kleine Antastkräfte, ist jedoch mit einer relativ großen Ungenauigkeit (Messfehler 5 μm) behaftet.

Schließlich ist es bekannt, mittels eines Mikroskops die-Position eines Tastelements zur Messung von Strukturen zu bestimmen, wobei gerätebedingt im Durchlichtverfahren gearbeitet werden muss, so dass allein Strukturen durchgehender Bohrungen oder sonstiger Durchbrechungen gemessen werden können.

Der vorliegenden Erfindung liegt das Problem zugrunde. ein Verfahren und eine Vorrichtung zur Messung der Oberflächentopographie von Objekten zu entwickeln, mit denen beliebige Strukturen und Objekte mit unterschiedlichen Oberflächenhärten mit einer hohen Messgenauikeit bestimmt werden können.

Das Problem wird bei einem Verfahren zur Messung von Strukturen eines Objekts mittels einem einem Koordinatenmessgerät zugeordneten von einem biegeelastischen Schaft ausgehenden Tastelement, das mit dem Objekt in Berührung gebracht und dessen Position sodann unmittelbar oder mittelbar über wenigstens eine dem Tastelement zugeordnete Zielmarke mit einem Sensor bestimmt wird, mit den Maßnahmen des Anspruchs 1 gelöst.

Die Antastkraft kann durch Verschieben des Schaftes innerhalb der Führung eingestellt werden.

Die Antastkraft hat bei manchen Objekten einen wesentlichen Einfluss auf die Messergebnisse. Mit dem erfindungsgemäßen Verfahren ist es möglich, die Antastkraft als Parameter der Messung den Gegebenheiten des Objekts wie der Oberflächentopographie und der Oberflächenhärte anzupassen.

Bei einer bevorzugten Ausführungsform wird die Antastkraft des Taslelements nach folgender Gleichung bestimmt:

$$F = \frac{3 \cdot E \cdot f \cdot I}{I^3}$$

worin mit F die Antastkraft, mit E der Elastizitätsmodul des Schafts, mit 1 die wirksame Biegelänge des Schafts zwischen einer starren Führung und dem Tastelement, mit I das axiale Flächenmoment des Schafts und mit f die Auslenkuns des Rastelements aus einer Ruhelage bezeichnet sind. Das Elastizitätsmodul, das axiale Flächen- bzw. Trägheitsmoment und die Länge sind durch die konstruktiven bzw. Materialeigenschaften der Vorrichtung vorgegeben und können zu einer Konstanten zusamroengefasst werden. Damit ist die Antastkraft proportional der Auslenkung und kann schnell und ohne aufwendige Rechenoperationen und -zeiten bestimmt werden.

Gegebenenfalls kann der Schaft innerhalb der Führung verschoben werden, um die wirksame Biegelänge zu verändern. Losgelöst hiervon ist durch die starre Aufnahme des Schafts stets reproduzierbar sichergestellt, dass der Schaft eine definierte Biegelänse aufweist.

Bei einer zweckmäßigen Ausführungsform wird die Antastkraft als Regelgröße in einem Regelkreis auf einem vorgebbaren, gleichbleibenden oder nahezu gleichbleibenden Wert eingestellt, wobei die Halterung von wenigstens einem motorischen Antrieb als Stellglied bewegbar ist. Die Antastkraft kann bei dieser Ausführungsform während der gesamten Messung einer Struktur auf einem vorgegebenen Wert gehalten werden. Für die Messung der Oberflächentoposraphie in drei Dimensionen ist es vielfach günstig, wenn die Halterung mit dem von ihr ausgehenden elastischen Schaft durch Antriebe in fünf Freiheitsgraden bewegt werden kann. Hierfür eignen sich numerische Regelkreise. Die Hulterung ist insbesondere mit dem Einstellmechanismus für das optische System zu einer Einheit verbunden, die motorisch in fünf Freiheitsgraden verstellbar ist.

Es ist weiterhin vorteilhaft, wenn die Auslenkung des Tastelements mittels eines optischen Sensors gemessen wird, der den Unterschied zwischen der Stellung des Tastelements in dessen Ruhelage und der Stellung des Tastelements bei Berührung mit der Oberfläche des Objekts erfasst. Der Sensor, der der gleiche wie für die Messung der Struktur ist, wird dabei zweckmäßigerweise gemeinsam mit der Halterung bewegt.

Die Position des Tastelementes und/oder der zumindest einen Zielmarke wird insbesondere mittels reflektierender und/oder durch dieses bzw. diese abschattender und/oder von dem Tastelement bzw. der Zielmarke abstrahlender Strahlung optisch bestimmt. Zweckmäßigerweise ist die Tasterverlängerung bzw. der Schaft als Lichtleiter ausgebildet oder umfasst einen solchen, um über diesen dem Tastelement bzw. der Zielmarke das erforderliche Licht zuzuführen.

Auch besteht die Möglichkeit, dass das Tastelement und/oder die Zielmarke als selbstleuchtendes elektronisches Element wie LED ausgebildet ist oder ein solches umfasst.

Insbesondere zeichnet sich die Erfindung aus durch eine Anordnung zur Messung von Strukturen eines Objekts mittels eines einem Koordinatenmessgerät zugeordneten von einem biegeleastischen Schaft ausgehenden Tastelement, das mit dem Objekt in Berührung bringbar ist und dessen Position sodann unmittelbar oder mittelbar über wenigstens eine dem Tastelement zugeordnete Zielmarke mit einem Sensor bestimmbar ist, wobei sich die Anordnung dadurch auszeichnet, dass der Schaft mit Ausnahme einer freien das Tastelement und/oder die Zielmarke umfassenden Biegelänge in einer starren oder im wesentlichen starren Führung verläuft. Hierdurch wird durch die wirksame Biegelänge definiert die Antastkraft vorgegeben, wodurch die Anordnung an die Gegebenheiten von Oberflächeneigenschaften des zu messenden Objektes anpassbar ist.

Insbesondere zeichnet sich die Anordnung dadurch aus, dass ein Sensor zur Messung der Auslenkung des Tastelementes und/oder der Zielmarke aus einer Ruhelage vorgesehen ist. dass der Schaft mit Ausnahme einer freien das Tastelement und/oder die Zielmarke umfassenden Biegelänge in einer starren oder im wesentlichen starren Führung verläuft, dass die Führung mit dem Schaft mit wenigstens einem motorischen Antrieb relativ zur Oberfläche des Objekts bewegbar ist und dass mit einer Auswerteeinrichtung aus der Auslenkung des Tastelementes und/oder der Zielmarke aus der Ruhelage die Antastkraft bestimmbar ist. Mit dieser Vorrichtung läßt sich die Antastkraft des Tastelementes an die Gegebenheiten der Oberflächeneigenschaften des Objekts anpassen. Beispielsweise kann die Antastkraft so auf die Härteeigenschaften der Oberfläche abgestimmt werden, dass eine möglichst hohe Messgenauigkeit erzielt wird. Dabei besteht die Möglichkeit, dass der Schaft innerhalb der Führung verschiebbar angeordnet ist.

Insbesondere bestimmt die Anordnung die Antastkraft aus dem Messwert der Auslenkung des Tastelements nach folgender Gleichung:

$$F = \frac{3 \cdot E \cdot f \cdot I}{l^3}$$

worin mit F die Antastkraft. mit f die Auslenkung, mit l die Länge des Schafts in seiner wirksamen Bieselange, mit E der Elastizitätsmodul des Schafts und mit I das axiale Flächenmoment des Schafts bezeichnet sind. Da in dieser Gleichung außer der Auslenkung f und der Antastkraft alle Größen konstant sind, kann die Auslenkung unter Berücksichtigung der Konstanten in der Einheit der Antastkraft geeicht werden.

Bei einer zweckmäßigen Ausführunosform ist ein optisches System zur Erfassung der Auslenkung des Tastelementes oder der Zielmarke aus einer Ruhelage vorgesehen und zumindest mit dem Tastelement und dem Schaft als Einheit bewegbar. Mit dem System, mit dem insbesondere auch die Oberflächentopographie bestimmt wird, kann die Ruhelage des Tastelements bzw, der wenigstens einen Zielmarke oder mehrere Zielmarken bestimmt werden, wenn keine Berührung mit einem Objekt oder Gegenstand stattfindet. Die entsprechende geometrische Position des Tastelements oder der wenigstens einen Zielmarke kann gespeichert werden und bei Lageanderung des Systems entsprechend angepasst werden. Bei Berührung des Tastelements mit einer Objektoberfläche wird der Unterschied zwischen Ruhelage und Position bei Berührung erfasst, z. B. aus der Tastelementlage und der zugeordneten Ruhelage. Das optische System zur Erfassung der Auslenkung des Tastelements oder der Zielmarke ist insbesondere als Istwertgeber in einem Regelkreis angeordnet, dessen Regelgröße die Antastkraft ist und der als Stellglied mindestens einen motorischen Antrieb für die Bewegung der das Tastelement, den Schaft und den Sensor enthaltenden Einheit aufweist. Das Tastelement kann am Schaft durch Kleben, Schweissen oder sonstige geeignete Verbindsarten angebracht sein. Auch kann das Tastelement und/oder die Zielmarke ein Abschnitt der Tastverlängerung selbst sein.

Der Schaft selbst kann endseitig als Taster ausgebildet sein oder einen solchen umfassen. Insbesondere kann das Tastelement und/oder die Zielmarke auswechselbar mit der Tastverlängerung wie Schaft verbunden sein.

Um nahezu beliebige Strukturen bestimmen zu können, ist des Weiteren vorgesehen, dass das Tastelement mit dem Schaft und dem optischen System von einer in fünf Freiheitsgraden justierbaren Halterung verstellbar ist. Die Halterung selbst kann wiederum mit dem Sensor eine Einheit bilden bzw. mit dem Sensor verbunden sein. Vorzugsweise sind das Testelement und der Schaft ein Lichtleiter, wobei dem Tastelement über den Lichtleiter Licht zuführbar ist. Hierbei leuchtet das Tastelement, das als Lichtfleck oder Lichtpunkt von dem optischen System erfasst wird. Das Tastelement und/oder die wenigstens eine Zielmarke können auch lichtreflektierend ausgebildet sein. Es besteht aber auch die Möglichkeit, das Tastelement und/oder die Zielmarke als selbstleuchtendes Element wie LED auszubilden.

Das optische System. das zur Bestimmung der Auslenkung des Tastelements aus seiner Ruhelage und zur Strukturmessung verwendet wird, ist insbesondere eine elektronische Kamera. Die Messung der Auslenkung geschieht insbesondere auch mit einem Fokussystem. wie dies in der optischen Koordinatenmesstechnik bei der Fokussierung auf die Werkstück- oberfläche bereits bekannt ist. Hierbei wird die Kontrastfunktion des Bildes in der elektronischen Kamera ausgewertet.

Zur Strukturbestimmting der Objekte wird die direkte Messung der Tastelementposition genutzt. Grundsätzlich kommen für diese direkte Messung viele unterschiedliche physikalische Prinzipien in Frage. Da die Messung der Tastelementauslenkung in einem großen Messbereich im Raum sehr genau erfolgen muss, z. B. um kontinuierliche Scanvorgänge zu ermöglichen, und um einen großen Überhub bei Objektantastung aufzunehmen (z. B. aus Sicherheitsgründen, aber auch um den Aufwand für eine genaue Positionierung zu verringern), kann auch ein photogrammetrisches Verfahren eingesetzt werden. Zwei Kamerasysteme mit zueinander geneigten Achsen könnten benutzt werden. Es können im Wesentlichen die aus der Industriephotogrammetrie bekannten Auswertetechniken eingesetzt werden.

Mit zwei z. B. zur Längsrichtung des Tastelements bzw. der diesem zugewandten Enden einer Tasterverlängerung wie Schaft geneigt "blickenden" Kameras sind alle Messaufgaben lösbar, bei denen das Tastelement nicht hinter Hinterschneidungen "verschwindet". Die Verwendung eine redundanten Anzahl von Kameras (z. B. drei) ermöglicht auch an Objekten mit steilen Konturen zu messen. Bei der Messung in kleinen Bohrungen kann eine Kamera benutzt werden, die so angeordnet ist, dass sie in Längsrichtung des Tastelements bzw. der Tasterverlängerung auf das Tastelement "blickt". Grundsätzlich ist bei zweidimensionalen Messungen (also z.B. bei Messungen in Bohrungen) eine einzige Kamera ausreichend, die auf die Längsrichtung der das Tastelement haltenden Tasterverlängerung wie Schaft ausgerichtet ist.

Es ist auch erfindungsgemäß möglich, auf dem als Lichtleitfaser ausgebildeten Schaft weitere beleuchtete Kugeln oder sonstige Zielmarken anzubringen, die Position dieser Zielmarken insbesondere photogrammetrisch zu erfassen und die Auslenkung des Tastelements entsprechend zu berechnen. Kuseln stellen dabei vergleichsweise ideale. eindeutige Zielmarken dar, die es auf der Faser ansonsten nicht gibt. Eine gute Lichteinkopplung in die Kugeln erreicht man durch Störung der Lichtleitereigenschaften des Schafts, indem man z. B. die durchbohrten volumenstreuenden Kugeln auf den Schaft, d. h. der Tasterverlängerung aufsteckt und mit diesem verklebt. Auch können die volumenstreuenden Kugeln seillich am Schaft angeklebt sein, wobei auch eine Lichteinkopplung möglich ist, vorausgesetzt, der Schaft führt bis zu seiner Oberfläche Licht, weist also einen Mantel an der Klebestelle nicht auf. Eine besonders hohe Genauigkeit wird erreicht, wenn die Tastelementposition als Funktion der Faserlage und Faserkrümmung (Zonen der Faser in einigem Abstand von dem Tastelement) experimentell erfasst (kalibriert) wird. Auch ist hier wieder die Anmessung von entlang der Faser aufgebrachten Zielmarken anstelle der Abmessung der Faser selbst möglich.

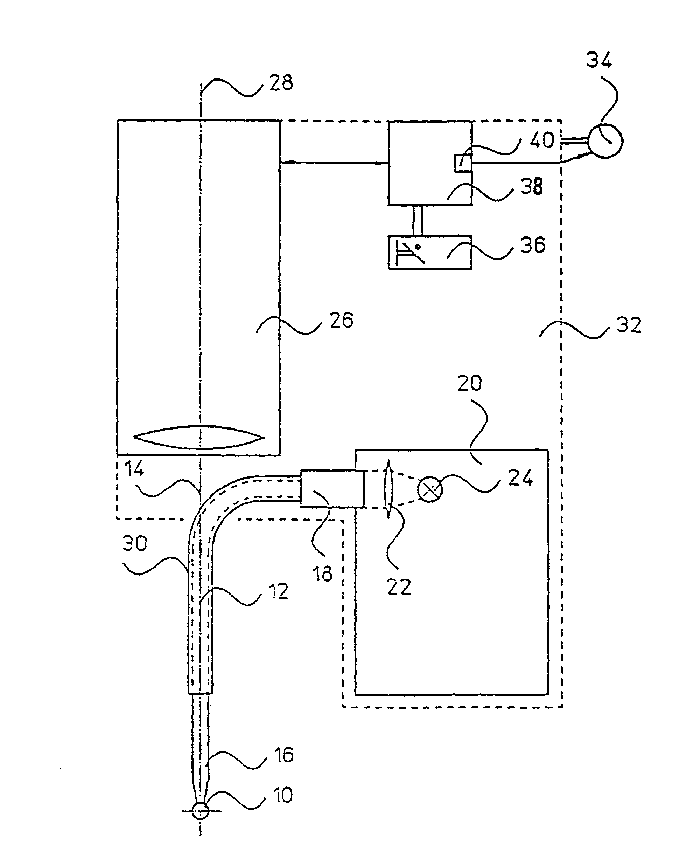

Weitere Einzelheiten. Vorteile und Merkmale der Erfindung ergeben sich nicht nur aus den Ansprüchen, den diesen zu entnehmenden Merkmalen - für sich und/oder in Kombination -, sondern auch aus der nachfolgenden Beschreibung von der Zeichnung zu entnehmenden bevorzugten Ausführungsbeispiel.

In der Zeichnung ist schematisch eine Anordnung zur Erfassung der Oberflächentopographie bzw. der Oberflächenstruktur bzw. der Geometrie von Gegenständen bzw.

Objekten dargestellt. Die Anordnung enthält ein Tastelement 10, insbesondere eine lichtdurchlässige Kugel. Das Tastelement 10 ist mit einem Schaft 12, einem Lichtleiter, in Form von Lichtleitfasern verbunden. Der Schaft 12 ist in einer steifen Hülle 14 oder Hülse mit einem ersten, nicht näher bezeichneten Abschnitt geführt. Die Hülse 14 fixiert die Lage dieses Abschnitts. Ein zweiter Abschnitt 16 des biegeelastischen Schafts 12 ragt aus der Hülse 14 heraus und trägt an seinem Ende das Tastelement 10. Durch die Länge des Abschnitts 16 wird die wirksame Biegelänge des Schafts 12 bestimmt. Dabei kann durch Verschiebung des Schafts innerhalb der Hülse 14 die Biegelänge gezielt verändert werden. Selbstverständlich kann die Länge des Abschnitts 16 z.B. messtechnisch oder gerätebedingt vorgegeben werden, so dass ein Verstellen nicht notwendig ist.

Die Hülse 14 ist an ihrem dem Abschnitt 16 abgewandten Ende in einem Halter 18 befestigt, der mit einem Gehäuse 20 verbunden ist. Im Gehäuse 20 befindet sich vor dem nicht dargestellten Ende des Schafts 18 eine Optik 22, mit der das von einer Lichtquelle 24 ausgesandte Licht in den Schaft 12 eingespeist wird. Mit dem Gehäuse 20 ist eine Einheit 26 verbunden, die ein nicht näher bezeichnetes optisches System zur Messung der Position des Tastelements 10 enthält. Zur Positionserfassung des Tastelements 10 kann eine Einrichtung verwendet werden, die an sich bekannt ist und auch zur Strukturvermessung eingesetzt wird. Die Position des Tastelements 10 kann mit einem Sensor, z. B. einem elektronischen Bildverarbeitungssystem wie elektronischer Kamera festgestellt werden. Auch kann die Position des Tastelements 10 bei dessen Berührung mit dem Messobjekt durch Auswertung einer Kontrastfunktion des Bildes mittels einer elektronischen Kamera erfasst werden. Eine weitere Möglickeit besteht darin, die Position des Tastelements 10 bei Berührung mit dem Messobjekt aus einer Größenänderung des Bildes wenigstens einer Zielmarke zu bestimmen, die am Schaft 12 angeordnet ist. Die Größenänderung ergibt sich aus dem strahlenoptischen Zusammenhang zwischen Objekt-Abstand und Vergrößerung.

Die Position des Tastelements 10 lässt sich auch aus der scheinbaren Größenänderung der Zielmarke ermitteln, die aus dem Kontrastverlust durch Defokussierung entsteht. Dabei wird die Position bei Berührung des Tastelements und des Objekts im Vergleich zur optischen Achse 28 des Bildverarbeitungssystems bzw, der elektronischen Kamera oder alternativ mit einem Photogrammetriesystem bestimmt.

Bei der Berührung zwischen Tastelement 10 und Objekt wirkt zwischen beiden eine Kraft, die einen Einfluss auf die Messergebnisse hat. Um eine genaue Messung zu erreichen, wird diese Antastkraft den Gegebenheiten des Objekts z. B. der Oberflächenhärte, Oberflächenrauhigkeit usw. angepasst. Dazu wird die Antastkraft zuerst gemessen. Die Messung der Antastkraft geschieht durch Erfassung der Auslenkung bzw. Biegung des Abschnitts 16 des Schafts 12. Die Größe der Auslenkung wird durch den Unterschied zwischen der Position des Tastelements 10 in der Ruhelage, die in der Zeichnung dargestellt ist, und der Lage bei Berührung zwischen Tastelement und Objekt bestimmt. Dabei nutzt man den erfindungsgemäßen Gedanken, dass der Schaft 12 über eine definierte Länge nur biegbar ist. nämlich dem Abschnitt 16, der über der Hülse 14 vorsteht.

Die Antastkraft F wird dabei nach folgender Gleichung bestimmt:

$$F= \frac{3 \cdot E \cdot f \cdot I}{l^3}$$

mit I = Länge des Abschnitts 16, d. h. der freien Faser, f = Durchbiegung (Auslenkung des Antastelements 10 aus der Ruhelage), E = Elastizitätsmodul des Schafts 12 bzw. Abschnitts 16 und I = axiales Flächenmoment des Schafts 12 bzw. Abschnitts 16.

Die Ruhelage des Tastelements 10 wird mit dem optischen System der Einheit 26 gemessen. Der Abschnitt 16 und ein Teil 30 der steifen Hülle 14 verlaufen längs der optischen Achse 28. Die Hülle 14 ist abgewinkelt bzw. gebogen. Der andere, nicht näher bezeichnete abgewinkelte Teil der Hülle 14 ist mit seinem Ende an der Hülse 18 befestigt.

Das Gehäuse 20 mit der Lichtquelle 24 und der Optik 22 ist mit der Einheit 26 auf einem gemeinsamen Träger 32 angeordnet, der nur schematisch dargestellt ist. Der Träger 32 ist wenigstens in den drei Richtungen des kartesischen Koordinatensystems motorisch verstellbar. Vorzugsweise ist der Träger in fünf Freiheitsgraden verstellbar.

Bei der Verstellung des Trägers 32 im Raum; d. h. bei der Änderung der Orientierung der optischen Achse 28 wird die Lage des Tastelements 10 in der Ruheposition, die dieser Lage der Achse im Raum entspricht, durch Berechnung ermittelt.

Berührt das Tastelement 10 eine Objektoberfläche, dann wird mit dem optischen System der Einheit 26 aus der Größe der Auslenkung des Tastelements 10 die Antastkraft nach obiger Gleichung bestimmt.

Da bis auf die Antastkraft und die Auslenkung alle Größen der Gleichung Konstante sind, ist die Antastkraft der Auslenkung proportional, wodurch sich die Antastkraft schnell und einfach bestimmen lässt. Die Auslenkung des Tastelements 10 wird nicht nur in Verbindung mit der räumlichen Stellung des Trägers 32 zur Messung der Oberflächentopologie sondern auch zur Messung der Antastkraft ausgenutzt.

Die Antastkraft kann auf einem Display angezeigt werden. Durch eine Änderung der Stellung des Trägers 32 mittels eines oder mehrerer motorischer Antriebe, die in der Zeichnung symbolisch durch einen einzigen Motor 34 dargestellt sind, kann die Anstellkraft auf gewünschte Werte eingestellt werden.

Die gemessene Antastkraft wird als Istwert der Regelgröße einem Vergleicher in einem Regelkreis zugeführt, dessen Sollwert mittels einer Eingabeeinheit 36 eingestellt wird. Bestandteil des Regelkreises ist ein Rechner 38, der den Istwert der Regelgröße aus der berechneten Ruhelage des Tastelements 10 im Raum in Bezug auf die jeweilige Lage der optischen Achse im Raum und der gemessenen Auslenkung bestimmt und der an Hand des Sollwertes die Regelabweichung ermittelt. Der Rechner 38 gibt über eine Ansteuerschaltung 40 Stellsignale an den Motor 34 aus. Durch die Regelung wird die Antastkraft auf einem gleichbleibenden oder nahezu gleichbleibenden Wert gehalten. Dies hängt vom gewählten Regelalgorithmus ab. Auf diese Weise wird die Antastkraft an die Gegebenheiten des Messobjekts angepasst und während der Messung der Struktur beibehalten. Für die gewählte Höhe der Antastkraft ist die Oberflächentopologie und die Oberflächenhärte des Messobjekts bestimmend.

Das für die Bestimmung der Antastkraft verwendete Tastelement 10 ist das gleiche wie für die Messung der Oberflächentopographie.

Die steife Hülle 14 bzw. Hülse ist vorzugsweise aus Metall.

Die Antastkraft wird bei der Messung von Strukturen an Objekten, die geringe Materialhärten haben bzw, nachgiebige Oberflächeneigenschaften haben, auf geringe Werte eingestellt. wodurch der Einfluss der Antastkraft auf die Messgenauigkeit nur gering ist.

**Patentansprüche**

1. Verfahren zur Messung von Strukturen eines Objektes mittels eines einem Koordinatenmessgerät zugeordneten von einem biegeelastischen Schaft (12) ausgehenden Tastelement (10), wobei das Tastelement mit dem Objekt in Berührung gebracht und sodann seine Position unmittelbar oder mittelbar über wenigstens eine dem Tastelement zugeordnete Zielmarke mit einem optischen Sensor bestimmt wird,
**dadurch gekennzeichnet,**
**dass** der Schaft (12) mit Ausnahme einer freien, das Tastelement (10) und/oder die Zielmarke umfassenden Biegelänge (16) innerhalb einer starren oder im wesentlichen starren Führung (30) verläuft und dass die zwischen Tastelement und Objekt bei Berühren dieses auftretende Antastkraft auf einen an die Gegebenheiten des Objektes angepaßten Wert durch Vorgeben der Biegelänge (16) eingestellt wird.

2. Verfahren nach Anspruch 1.
**dadurch gekennzeichnet,**
**dass** der Schaft (12) innerhalb der Führung (30) verschiebbar angeordnet wird.

3. Verfahren nach zumindest einem der vorhergehenden Ansprüche,
**dadurch gekennzeichnet,**
**dass** die Antastkraft des Tastelements (10) nach folgender Gleichung bestimmt wird:

$$F = \frac{3 \cdot E \cdot f \cdot I}{l^3}$$

worin mit F die Antastkraft, mit E der Elastizitätsmodul des Schafts (12), mit l die freie wirksame Biegelänge (16) des Schafts außerhalb der Führung, mit I das axiale Flächenmoment des Schafts und mit f die Auslenkung des Tastelements aus seiner Ruhelage bezeichnet sind.

4. Verfahren nach zumindest einem der vorhergehenden Ansprüche,
**dadurch gekennzeichnet,**
**dass** die Antastkraft als Regelgröße in einem Regelkreis auf einen vorgebbaren. gleichbleibenden oder nahezu gleichbleibenden Wert eingestellt wird und dass eine Halterung, von der Schaft (12) ausgeht, von wenigstens einem motorischen Antrieb als Stellglied bewegt wird.

5. Verfahren nach mindestens einem der vorhergehenden Ansprüche,
**dadurch gekennzeichnet,**
**dass** die Auslenkung des Tastelements (10) mittels eines optischen Sensors gemessen wird, der die Stellung des Tastelelements in dessen Ruhelage und die Stellung des Tastelements bei Berührung mit der Oberfläche eines Objekts erfasst.

6. Verfahren nach mindestens einem der vorhergehenden Ansprüche,
**dadurch gekennzeichnet,**
**dass** die Stellung des Tastelements (10) und/oder der zumindest einen Zielmarke mittels reflektierender und/oder dieses bzw. diese abschattender und/oder von dem Tastelement abstrahlender Strahlung bestimmt wird. >

7. Verfahren nach zumindest einem der vorhergehenden Ansprüche,
**dadurch gekennzeichnet,**
**dass** die Ruhelage des Tastelements (10) in einer vorgegebenen Position des optischen Sensors gemessen wird. dass die Ruhelagen des Tastelements in von diesen Positionen des optischen Sensors abweichenden Positionen aus der vorgegebenen Position und der Lageänderung des optischen Sensors bestimmt weiden und dass die Lage des Tastelements bei Berührung mit dem Objekt mit dem optischen Sensor gemessen und die Messwerte für die Struktur des Objekts und die Bestimmung und Auslenkung der Antastkraft verarbeitet werden.

8. Anordnung zur Messung von Strukturen eines Objektes mittels eines einem Koordinatenmessgerät zugeordneten von einem biegeelastischen Schaft (12) ausgehenden Tastelement (10), das mit dem Objekt in Berührung bringbar und dessen Position sodann unmittelbar oder mittelbar über wenigstens eine dern Tastelement zugeordnete Zielmarke mit einem optischen Sensor bestimmbar ist,
**dadurch gekennzeichnet,**
**dass** der Schaft (12) mit Ausnahme einer freien das Tastelement (10) und/oder der Zielmarke aufweisenden Biegelänge (16) innerhalb einer starren oder im wesentlichen einer starren Führung (30) verläuft.

9. Anordnung nach Anspruch 8,
**dadurch gekennzeichnet,**
**dass** ein Sensor zur Messung der Auslenkung des Tastelementes und/oder der Zielmarke aus einer Ruhelage vorgesehen ist, dass das Tastelement und der elastische Schaft zusammen mit der Führung (30) mit wenigstens einem motorischen Antrieb (34) relativ zur Oberfläche des zu messenden Objektes bewegbar sind und dass mit einer Auswerteeinheit aus der Größe der Auslenkung des Tastelementes und/oder der Zielmarke aus der Ruhelage die Antastkraft bestimmbar ist.

10. Anordnung nach zumindest Anspruch 9,
**dadurch gekennzeichnet.**
**dass** die Antastkraft aus dem Wert der Größe der Auslenkung nach folgender Gleichung bestimmt wird:

$$F = \frac{3 \cdot E \cdot f \cdot I}{l^3}$$

worin mit F die Antastkraft, mit f die Größe der Auslenkung aus der Ruhelage, mit l die Länge des elastischen Schafts (12) zwischen dem Tastelement (10) und einer starren Hülse (30), mit E der Elastizitätsmodul des Schafts (12) und mit I das axiale Flächenmoment des Schafts (12) bezeichnet sind.

11. Anordnung nach zumindest einem der Ansprüch 8-10,
    **dadurch gekennzeichnet,**
    **dass** ein optisches System zur Erfassung der Auslenkung des Tastelements (10) oder der wenigstens einen Zielmarke aus der Ruhelage vorgesehen und zumindest mit dem Tastelement (10) und dem Schaft (12) als Einheit bewegbar ist.

12. Anordnung nach zumindest einem der Ansprüche 8-11,
    **dadurch gekennzeichnet,**
    **dass** das optische System zum Erfassen der Auslenkung des Tastelements in einem Regelkreis angeordnet ist, dessen Regelgröße die Antastkraft ist und der als Stellglied wenigstens einen motorischen Antrieb für die Bewegung der das Tastelement, den Schaft und den Sensor enthaltenden Einheit aufweist.

13. Anordnung nach zumindest einem der Ansprüche 11 und 12,
    **dadurch gekennzeichnet,**
    **dass** des Tastelement (10) mit dem Schaft (12) und dem optischen System von einer in fünf Freiheitsgraden bewegbaren Halterung verstellbar ist.

14. Anordnung nach zumindest einem der Ansprüche 8-13,
    **dadurch gekennzeichnet,**
    **dass** das Tastelement (10) und der Schaft (12) Lichtleiter sind und dass dem Tastelement (10) über den Lichtleiter Licht zuführbar ist.

15. Anordnung nach zumindest einem der Ansprüche 11-14,
    **dadurch gekennzeichnet,**
    **dass** das optische System zur Bestimmung der Auslenkung des Tastelements (10) eine elektronische Karnera oder ein Fokussystem ist.

16. Anordnung nach zumindest einem der Ansprüche 11-15,
    **dadurch gekennzeichnet,**
    **dass** das optische System zur Erfassung der Auslenkung des Tastelements (10) aus der Ruhelage auch für die Messung der Struktur des Objekts vorgesehen ist.

17. Anordnung nach zumindest einem der Ansprüche 11-15,
    **dadurch gekennzeichnet,**
    **dass** ein Rechner für die Berechnung der Position des Tastelements in Bezug auf die Lade des optischen Systems bei der Messung der Ruhelage des Tastelements und bei Änderung der Lage des optischen Systems im Raum vorgesehen ist.

18. Anordnung nach zumindest einem der Ansprüche 11-17,
    **dadurch gekennzeichnet,**
    **dass** die wirksame Biegelänge des in einer der Führung wie Hülse (14) geführten bzw. aufgenommenen Schafts (12) durch seinen vorderen außerhalb der Führung verlaufenden das Tastelement (10) aufweisenden Abschnitt (16) bestimmt ist.

19. Anordnung nach zumindest einem der Ansprüche 8-18,
    **dadurch gekennzeichnet**,
    class der Schaft (12) innerhalb der Führung (14) verschiebbar angeordnet ist.

**Claims**

1. Method for measuring the structures of an object with a feeler element (10) that is allocated to a coordinate measuring device and starts from a flexible shaft (12), with the feeler element being brought into contact wit the object and then its position being determined directly or indirectly with at least one reticule, which is allocated to the feeler element, with an optical sensor,
   **characterized in**
   **that** the shaft (12), with the exception of a free bending length (16) that comprises the feeler element (10) and/or the reticule, runs within a rigid or basically rigid guiding piece (30) and that the scanning force, which occurs upon contact between the feeler element and the object, is set to a value that has been adjusted to the conditions of the object by specifying the bending length (16).

2. Method according to Claim 1,
   **characterized in**
   **that** the shaft (12) is arranged within the guiding piece (30) in a moveable fashion.

3. Method according to at least one of the preceding claims,
   **characterized in**
   **that** the scanning force of the feeler element (10) is determined based on the following equation:

$$F=\frac{3 \cdot E \cdot f \cdot I}{I^3}$$

wherein F describes the scanning force, E the modulus of elasticity of the shaft (12), l the free effective bending length (16) of the shaft outside the guiding piece, I the axial surface moment of the shaft, and f the excursion of the feeler element from its neutral position.

4. Method according to at least one of the preceding claims,
   **characterized in**
   **that** the scanning force is set as a controlled variable in a control circuit to a specifiable, constant or nearly constant value and that a support from which shaft (12) extends is moved by at least one motor as actuator.

5. Method according to at least one of the preceding claims,
   **characterized in**
   **that** the excursion of the feeler element (10) is measured with an optical sensor, which records the position of the feeler element in its neutral position and the position of the feeler element upon contact with the surface of an object.

6. Method according to at least one of the preceding claims,
   **characterized in**
   **that** the position of the feeler element (10) and/or of the at least one reticule is determined via reflective radiation and/or shading radiation of the element or reticule and/or reflecting from the feeler element.

7. Method according to at least one of the preceding claims,
   **characterized in**
   **that** the neutral position of the feeler element (10) is measured in a specified position of the optical sensor, that the neutral positions of the feeler element in positions deviant from these positions of the optical sensor are determined from the specified position and the change in position of the optical sensor and that the position of the feeler element upon contact with the object is measured with the optical sensor and the measurement values for the structure of the object and the determination and excursion of the scanning force are processed.

8. Arrangement for measuring the structures of an object, with a feeler element (10) that is allocated to a coordinate measuring device, that starts from a flexible shaft (12), that can be brought into contact with the object and whose position can then be determined directly or indirectly with at least one reticule, which is allocated to the feeler element, with an optical sensor,
   **characterized in**
   **that** the shaft (12), with the exception of a free bending length (16) comprising the feeler element (10) and/or the reticule, runs within a rigid or basically rigid guiding piece (30).

9. Arrangement according to Claim 8,
   **characterized in**
   **that** a sensor is provided for measuring the excursion of the feeler element and/or the reticule from a neutral position, that the feeler element and the elastic shaft can be moved, together with the guiding piece (30), relative to the surface of the object that is to be measured by at least one motor (34) and that the scanning force can be determined with an evaluating unit from the value of the excursion of the feeler element and/or the reticule from the neutral position.

10. Arrangement in accordance with at least Claim 9,
    **characterized in**
    **that** the scanning force is determined from the value of the excursion based on the following equation:

$$F=\frac{3 \cdot E \cdot f \cdot I}{I^3}$$

wherein F describes the scanning force, f the extent of excursion from the neutral position, l the length of the elastic shaft (12) between the feeler elements (10) and a rigid sleeve (30), E the modulus of elasticity of the shaft (12) and I the axial surface moment of the shaft (12).

11. Arrangement according to at least one of the Claims 8 - 10,
    **characterized in**
    **that** an optical system is provided for recording the excursion of the feeler element (10) or the at least one reticule from a neutral position and can be moved at least with the feeler element (10) and the shaft (12) as unit.

12. Arrangement according to at least one of the claims 8 - 11,
    **characterized in**
    **that** the optical system for recording the excursion of the feeler element is arranged in a control circuit, whose controlled variable is the scanning force and which, as an actuator, is equipped with at least one motor for moving the unit containing the feeler element, the shaft and the sensor.

13. Arrangement according to at least one of the Claims 11 and 12,
**characterized in**
**that** the feeler element (10) can be adjusted together with the shaft (12) and the optical system with a support that can be set to five degrees of freedom.

14. Arrangement according to at least one of the Claims 8 - 13,
**characterized in**
**that** the feeler element (10) and the shaft (12) are fiber-optic light guides and that the feeler element (10) can be fed light via the light guide.

15. Arrangement according to at least one of the Claims 11 - 14,
**characterized in**
**that** the optical system for determining the excursion of the feeler element (10) is an electronic camera or a focusing system.

16. Arrangement according to at least one of the Claims 11 - 15,
**characterized in**
**that** the optical system for recording the excursion of the feeler element (10) from the neutral position is also provided for measuring the structure of the object.

17. Arrangement according to at least one of the Claims 11 - 15,
**characterized in**
**that** a computer is provided for calculating the position of the feeler element relative to the position of the optical system when measuring the neutral position of the feeler element and when changing the position of the optical system in the space.

18. Arrangement according to at least one of the Claims 11 - 17,
**characterized in**
**that** the effective bending length of the shaft (12) running or being held in a rigid guiding piece such as a sleeve (14) is determined by its front section (16), which runs outside the guiding piece and contains the feeler element (10).

19. Arrangement according to at least one of the Claims 8 - 18,
**characterized in**
**that** the shaft (12) is arranged within the guiding piece (14) in a moveable fashion

## Revendications

1. Procédé de mesure de la structure d'un objet au moyen d'un élément palpeur (10) associé à un appareil de mesure de coordonnée et issu d'une tige (12) à flexion élastique, l'élément palpeur étant amené en contact avec l'objet et sa position étant aussitôt définie directement ou indirectement au moyen d'un détecteur optique visant une marque-cible associée à l'élément palpeur,
**caractérisé en ce que**
la tige (12), à l'exception d'une longueur de flexion (16) libre, entourant l'élément palpeur (10) et/ou la marque-cible, se déplace à l'intérieur d'un guidage (30) rigide dans sa plus grande partie et la force de palpage apparaissant entre l'élément palpeur et l'objet quand ils viennent en contact est réglée sur une valeur ajustée aux donnés de l'objet par prédéfinition de la longueur de flexion (16)

2. Procédé selon la revendication 1,
**caractérisé en ce que**
la tige (12) peut coulisser à l'intérieur du guidage (30).

3. Procédé selon la revendication 1 ou 2,
**caractérisé en ce que**
la force de palpage de l'élément palpeur (10) est définie par la relation

$$F = \frac{3 \cdot E \cdot f \cdot l}{l^3}$$

dans laquelle F est la force de palpage, E le module d'élasticité de la tige (12), 1 la longueur (16) effective de flexion libre de la tige en dehors du guidage, I le couple axial de surface et f la déviation de l'élément palpeur par rapport à sa position de repos.

4. Procédé selon au moins une des revendications précédentes,
**caractérisé en ce que**
la force de palpage est introduite dans un circuit de réglage, comme grandeur à régler sur une valeur constante ou à peu près constante-et un support partant de la tige (12) est déplacé en tant qu'organe mobile par un entraînement motorisé.

5. Procédé selon au moins une des revendications précédentes,
**caractérisé en ce que**
la déviation de l'élément palpeur (10) est mesurée par un détecteur optique, qui saisit la position de l'élément palpeur quand celui-ci est en repos et quand il est en contact avec le surface de l'objet.

6. Procédé selon au moins une des revendications précédentes,
**caractérisé en ce que**
la position de l'élément palpeur (10) et/ou d'au moins une marque-cible est définie par un rayonnement réfléchissant et/ou désombrageant l'élément ou la marque, ou diffractant de l'élément palpeur.

7. Procédé selon au moins une des revendications précédentes,
**caractérisé en ce que**

- la position de repos de l'élément palpeur (10) est mesurée dans une position prédéfinie du détecteur optique,
- les positions de repos de l'élément palpeur correspondant à des positions de détecteur optique différentes de la position prédéfinie sont déterminées à partir de cette position prédéfinie et de la variation de position du détecteur, et
- la position de l'élément palpeur en contact avec l'objet est mesurée par le détecteur optique et les valeurs de mesure sont exploitées pour la structure de l'objet et pour le détermination et la déviation de la force de palpage.

8. Dispositif de mesure de la structure d'un objet au moyen d'un élément palpeur (10) associé à un appareil de mesure de coordonnées et issu d'une tige (12) à flexion élastique, l'élément palpeur étant amené en contact avec l'objet et sa position étant aussitôt définie directement ou indirectement au moyen d'un détecteur optique visant une marque-cible associée à l'élément palpeur,
**caractérisé en ce que**
la tige (12), à l'exception d'une longueur de flexion (16) libre, entourant l'élément palpeur (10) et/ou la marque-cible, se déplace à l'intérieur d'un guidage (30) rigide.

9. Dispositif selon la revendication 8,
**caractérisé en ce qu'**
un détecteur est prévu pour mesurer la déviation de l'élément palpeur et/ou de la marque-cible à partir d'une position de repos,
l'élément palpeur et la tige élastique peuvent se déplacer avec le guidage (30), par rapport à la surface de l'objet à mesurer, sous l'action d'un entraînement motorisé (34), et
une unité d'exploitation peut déterminer la force de palpage à partir de la grandeur de la déviation de l'élément de palpage et/ou de la marque-cible par rapport à la position de repos.

10. Dispositif selon la revendication 9,
**caractérisé en ce que**
la force de palpage est définie à partir de la valeur de la déviation par la formule suivante

$$F = \frac{3 \cdot E.f.I}{l^3}$$

dans laquelle
F est la force de palpage, f la glandeur de la déviation à partir de la position de repos, l la longueur de la tige élastique (12) entre l'élément palpeur (10) et une douille rigide (30), E le module d'élasticité de la tige (12), I le couple axial de surface de la tige (12).

11. Dispositif selon au moins une des revendications 8 à 10,
**caractérisé en ce qu'**
un dispositif optique est prévu pour saisir la déviation par rapport à la position de repos de l'élément palpeur (10) ou d'au moins une marque-cible et ce dispositif peut se déplacer en formant une unité avec l'élément palpeur (10) et la tige (12).

12. Dispositif selon au moins une des revendications 8 à 11,
**caractérisé en ce que**
le système optique pour saisir la déviation de l'élément palpeur est monté dans un circuit de réglage dont la grandeur à régler est la force de palpage et qui présente comme organe de réglage au moins un entraînement motorisé pour déplacer l'unité contenant l'élément palpeur, la tige et la détecteur.

13. Dispositif selon au moins une des revendications 11 et 12,
**caractérisé en ce que**
l'élément palpeur (10), avec la tige (12) et le système optique, peut être déplacé par un support mobile présentant cinq degrés de liberté.

14. Dispositif selon au moins une des revendications 8 à 13,
**caractérisé en ce que**
l'élément palpeur (10) et la tige (12) sont des conducteurs de lumière qui peuvent apporter de la lumière à l'élément de palpage.

15. Dispositif selon au moins une des revendications 11 à 14,
**caractérisé en ce que**
le système optique servant à déterminer la déviation de l'élément palpeur (10) est une caméra électronique ou un système focalisateur.

16. Dispositif selon au moins une des revendications 11 à 15,
**caractérisé en ce que**
le système optique de saisie de la déviation de l'élément palpeur (10) par rapport à la position de repos est également prévu pour mesurer la structure de l'objet.

17. Dispositif selon au moins une des revendications 11 à 15,

**caractérisé en ce qu'**

il est prévu un calculateur pour calculer la position de l'élément palpeur par rapport à la position du système optique lors de la mesure de la position de repos de l'élément palpeur et lors de la variation de la position du système optique dans l'espace.

**18.** Dispositif selon au moins une des revendications 11 à 17,

**caractérisé en ce que**

la longueur de flexion efficace de la tige (12) logée dans un guidage tel qu'une douille (14) est définie par sa partie (16) portant l'élément palpeur (10) et située à l'extérieur, devant le guidage.

**19.** Dispositif selon au moins une des revendications 8 à 18,

**caractérisé en ce que**,

la tige (12) peut coulisser dans le guidage (14).